(19) Europäisches Patentamt

European Patent Office

Office européen des brevets

(11) EP 0 617 196 B1

## (12) EUROPEAN PATENT SPECIFICATION

(45) Date of publication and mention
of the grant of the patent:
**28.06.2000  Bulletin 2000/26**

(51) Int. Cl.[7]: **E21B 47/12**

(21) Application number: **94302073.5**

(22) Date of filing: **23.03.1994**

(54) **Digital mud pulse telemetry system**

Digitale Schlammpulstelemetrieanordnung

Dispositif de télémétrie digitale à impulsions de boue

(84) Designated Contracting States:
**DE FR GB NL**

(30) Priority: **26.03.1993 US 37757**

(43) Date of publication of application:
**28.09.1994  Bulletin 1994/39**

(73) Proprietor:
**HALLIBURTON ENERGY SERVICES, INC.
Duncan Oklahoma 73536 (US)**

(72) Inventors:
• **Gardner, Wallace R.
Houston, Texas 77083 (US)**

• **Gilbert, Gregory N.
Missouri City, Texas 77459 (US)**

(74) Representative:
**Wain, Christopher Paul et al
A.A. Thornton & Co.
235 High Holborn
London WC1V 7LE (GB)**

(56) References cited:
**EP-A- 0 226 514        US-A- 3 863 203
US-A- 4 703 461        US-A- 4 734 892**

**Description**

The present invention relates to a digital mud pulse telemetry system. The system is particularly (but not exclusively) useful for measuring while drilling (MWD) applications.

Significant savings of time and, therefore, expense can be realized in the drilling of wells, such as oil and gas wells, by obtaining various downhole measurements without removing the drill string from the well. Effectively, the well is logged as it is being drilled. A sub assembly, usually positioned just above the drill bit, carries the measuring equipment. During a pause in the drilling activity, such as when additional drill pipe segments are added to the drill string at the surface, measurements are taken and raw data signals are initially processed in the sub assembly. Data may be stored in the sub assembly for retrieval when the drill string is withdrawn from the well, for example. Such interim data retrieval may be cost-effective. However, one or another telemetry technique may be utilized to transmit the data to the surface for processing and utilization while the well is still being drilled.

One category of MWD telemetry available utilizes acoustic signals transmitted through the drilling mud being circulated through the interior of the drill string. Such mud is introduced into the drill string at the surface, passes down the interior of the drill string and out through one or more apertures in the drill bit. From there, the mud circulates back to the surface by means of the annular region between the exterior of the drill string and the wall of the well being drilled. The drilling mud thus carries cuttings to the surface from the bottom of the well, and lubricates and cools the drill bit. Additionally, the column of drilling mud thus formed within the well acts as a dynamic plug to counter high pressure fluid that may be released from an underground formation and enter the well. At the surface, the returning drilling mud may be processed to remove cuttings, and to be degassed, for example, after which the mud can be recirculated back down the interior of the drill string. A pump drives the mud into the drill string.

The downhole measuring-while-drilling sub assembly may be equipped with an appropriate transmitter including a valve assembly to communicate with the surface along the mud column within the drill string. The valve is appropriately opened and closed to produce binary, bi-level pulse pressure waves in the mud within the drill string that propagate to the surface where they may be sensed by a pressure transducer. The pressure pulses may be positive or negative, and are generated to convey data corresponding to the data signals acquired from the various downhole measuring and sensing instruments included in the measuring-while-drilling system. The data from the downhole sensors is encoded into binary signals which are used to control when the valve is opened and closed. The data transmission rate is controlled, in part, by the rate of opening and closing of the mud valve. The valve generally exhibits relatively poor dynamic response in transitioning between the open and closed positions corresponding to the two signal levels due to inadequate power of the solenoid, commonly used to operate the valve, working against large mud pressures. At the surface, the pressure transducer communicates with the drilling mud stream that is entering the upper end of the drill string to detect the mud pulse signals. Digital, binary electrical signals formed by the surface transducer in response to the mud pulses may be processed and reduced to provide data corresponding to the measurements acquired downhole.

Another type of known mud pressure wave transmitter is a mud siren which continuously phase modulates a sine wave generated by a rotary valve. The phase modulation is achieved by changing the speed of the motor rotating the valve. The limited dynamic response of the motor working against the drilling mud pressures limits the rate of data transmission that can be achieved with the mud siren.

The various mud pressure wave telemetry techniques for use with MWD place limitations on the data transmission rates and available signal strengths. The mud-pulse telemetry data rate is an inverse function of the depth of the well and of the mud viscosity because of the increased attenuation of the mud-pulse signal. Further, noise in the mud column from various sources renders the signal-to-noise ratio low, so that the noise must somehow -be filtered from the data-conveying signal. Sources of such noise include the mud pump used to circulate the mud into the top of the drill string, the operation of the drill bit and the banging of the drill string against the sides of the well. With known systems, information signals are not always able to be transmitted uplink while drilling is actually taking place.

Control signals must be sent downlink to control the operation of measuring instruments, for example. Such signaling is traditionally done by altering drilling parameters, such as drilling mud flow rate, drilling mud pressure, drill string rotation rate, and the like. Such variations in parameters may be effected in selected sequences to convey the necessary commands. In general, however, if the drilling operation is being conducted as rapidly as possible, variations in drilling parameters will tend to slow down the drilling operation.

MWD has been utilized to obtain directional drilling data, including azimuth, orientation and tool face, along with a limited amount of formation evaluation data, such as gamma and resistivity measurements. Drilling efficiency measurements, including measurements of the weight on the drill bit, torque, differential pressures and temperature downhole, and more extensive formation evaluation measurements, such as neutron porosity measurements, gamma density measurements and acoustic propagation velocity measurements, are being pursued using MWD. However, increasing the quantity of measurements made taxes the telemetry data rate. Presently available MWD telemetry techniques, such as utilizing binary pulse signals or the phase modulated mud siren signals, are relatively bandwidth inefficient, providing only relatively low data transmission rates, on the order of one bit per second up to several bits per second. If proposed new measurement capabilities are to be included in an MWD system, data transmission rates on the order of ten to twenty bits per second will be needed to insure efficient operation of the MWD system, including data reception and processing at the surface. Improved telemetry must be utilized, including use of communication signals that are more bandwidth efficient. The present invention is directed to improved acoustic wave communication techniques.

US-A-4703461 discloses a mud pulse telemetry system in which multistate mud pulsing is achieved by generating positive and negative pulses within a drill string by means of a plurality of selectively operable bypass passages around a restriction to primary mud flow within a drill string or by venting to outside of the drill string. Selective activation of valving for distributing the mud downstream from the restriction or to the exterior of the drill string allows the apparatus to be used as a simple positive pressure pulse telemetry system, a simple negative pressure telemetry system or a multistate mud pulse telemetry system. In particular, a system capable of three or four state telemetry comprises two interlinked bypass passages.

According to the present invention, there is provided a digital mud pulse telemetry system, which comprises:

a. a transmitter, including a multi-level encoder and a mud-pulse transmitter; and
b. a receiver including a multi-level decoder; characterised in that said mud-pulse transmitter is a continuous value mud-pulse transmitter.

In one preferred arrangement, the system also comprises a downlink system, and preferably the signals transmitted from the main (uplink) transmitter and from the downlink system are multiplexed.

Preferably, the downlink system is an on-off-tone system comprising:

a. a downlink transmitter including an on-off-tone modulator, a bandpass filter and a continuous-value mud pulse transmitter; and
b. a receiver including an input bandpass filter, an automatic-gain-control, and an on-off-tome demodulator.

The system of the invention also preferably comprises at least one downhole sensor; a multiplexer as part of the transmitter; an analog-to-digital converter as part of the transmitter; and at least one filter as part of the transmitter.

The present invention provides an acoustic telemetry system utilizing modern digital communications techniques. The telemetry system employs multi-level pulse amplitude modulation and a transmitter that is continuous valued and linear in operation. The system may include transmitters and receivers for propagating signals in opposite directions along the same acoustic-signal bearing medium, wherein the signals moving in opposite directions along the same medium at the same time are frequency-multiplexed. The system may operate in various multi-level modes, including use of three-level duobinary signals as well as quadrature amplitude modulated three-level duobinary signals. The system may be operated in a baseband utilizing three-level duobinary signals, and may be operated in a passband utilizing quadrature amplitude modulated three-level duobinary signals.

A telemetry system according to the present invention may be utilized to communicate signals along the mud channel in a well, particularly in a measuring-while-drilling system. The subsurface transmitter employs a multi-level encoder and includes a continuous-value (that is, capable of producing a continuously-valued signal) mud pulse transmitter including a mud valve. The surface receiver includes a matching multi-level decoder. The mud valve may be hydraulically operated, or driven, and take a variety of forms, including a poppet valve and a sleeve valve. Feedback signals are provided to a controller of the valve to maintain operation of the valve as linear, or essentially linear. The feedback signals include a measure of the differential pressure across the valve element as well as the configuration of the value.

The downhole transmitter acquires signals from one or more sensors as part of the measuring-while-drilling system, and utilizes a multiplexer, an analog-to-digital converter and a filter to convert the sensor signals for production of the mud pulse signals. The downhole transmitter may further include a scrambler, and a forward error correction encoder.

The surface receiver includes a mud pulse pressure transducer, a filter, an automatic gain controller, an analog-to-digital converter, a noise canceler, a clock recovery circuit and a slicer. The surface receiver may also include a decision feedback equalizer, a descrambler, and a forward error correction decoder.

A telemetry system according to the present invention may also include a downlink telemetry system, including a continuous-value mud pulse transmitter at the surface for producing control signals to be communicated to the downhole measuring-while-drilling apparatus. The downlink signals may be of the on-off-tone modulated format. The uplink and downlink signals may be multiplexed for simultaneous transmission along the same mud channel.

In a method of the invention, a subsurface transmitter produces continuously-valued signals utilizing a mud pulse transmitter operating linearly. The mud pulse transmitter is controlled, at least in part, based on feedback signals which are determined by the differential pressure across the valve element of the valve of the transmitter as well as the configuration of the valve. The mud valve may be operated hydraulically. Downlink signals produced as part of the method of the invention are multiplexed with uplink signals for simultaneous communication along the same mud channel. The downlink signals may be generated in an on-off-tone format. The uplink signals are generated utilizing at least one three-level encoder. The uplink signals may be produced in a variety of multi-level codes, including three-level duobinary and quadrature amplitude modulated three-level duobinary. In general, the present invention may employ any form of multi-level pulse amplitude modulation for generating telemetry signals, including use of a convolutional coding transmitter and a Viterbi receiver.

The present invention provides a mud pulse telemetry system and method for use in a measuring-while-drilling system, and provides the capability of communicating signals at a data rate of ten bits per second or greater. The present invention thus provides a mechanism whereby present measuring-while-drilling capabilities may be expanded.

In order that the invention may be more fully understood, embodiments thereof will now be described, by way of example only, with reference to the accompanying drawings, in which:

Fig. 1 is a block diagram of an MWD telemetry system showing a surface telemetry unit and a subsurface telemetry unit, according to the present invention;

Fig. 2 is a block diagram of a subsurface transceiver for use as part of the telemetry system of Fig. 1;

Fig. 3 is a block diagram of a surface transceiver for use as part of the telemetry system of Fig. 1;

Fig. 4 is a more detailed block diagram of a baseband version of the uplink transmitter of the subsurface transceiver of Fig. 2;

Fig. 5 is a more detailed block diagram of a baseband version of the uplink receiver of the surface transceiver of Fig. 3;

Fig. 6 is a block diagram of a clock recovery circuit for use in the baseband uplink receiver of Fig. 5;

Fig. 7, parts (a) through (c), provide a block diagram of a 3-level duobinary (3DB) encoder, data stream and waveforms at various points relative to the encoder, and a comparison of 3-DB signal values input to a 3DB decoder with binary signal values output from the decoder, respectively;

Fig. 8, parts (a) and (b), provide baseband and bandpass signal spectra, respectively;

Fig. 9 is a more detailed block diagram of a bandpass version of the uplink transmitter of the subsurface transceiver of Fig. 2;

Fig. 10 is a more detailed block diagram of the transmitter quadrature section of the bandpass transmitter of Fig. 9;

Fig. 11, parts (a) and (b), provide a block diagram of a quadrature, amplitude modulated 3-level duobinary (QAM3DB) encoder, and data streams and waveforms at various points relative to the encoder, respectively;

Fig. 12 is a more detailed block diagram of a bandpass version of the uplink receiver of the surface transceiver of Fig. 3;

Fig. 13 is a more detailed block diagram of the receiver quadrature section of the bandpass receiver of Fig. 12;

Fig. 14 provides a downlink control signal data stream and corresponding waveforms produced by the downlink transmitter of the surface transceiver of Fig. 3;

Fig. 15 is a schematic, side elevation of a well being drilled, employing an MWD telemetry system according to the present invention;

Fig. 16 is a schematic diagram of one form of continuous-value, linear mud pulse transmitter according to the present invention;

Fig. 17 is a lateral cross section of a sub assembly, showing the positioning of the mud pulse valve of Fig. 16; and

Fig. 18 is a schematic diagram showing another form of continuous-value, linear mud pulse transmitter according to the present invention.

## DESCRIPTION OF PREFERRED EMBODIMENTS

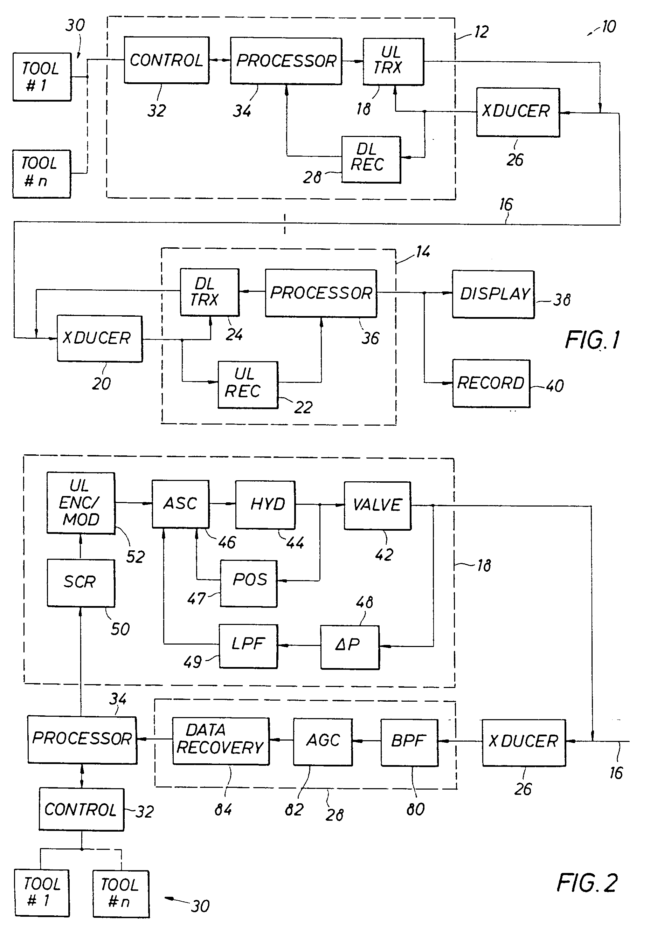

An MWD telemetry system according to the present invention is shown schematically generally at 10 in Fig. 1, and includes a subsurface telemetry unit 12 and a surface telemetry unit 14. The subsurface unit 12 would be included in a sub assembly toward the bottom of a drill string, for example, while the surface unit 14 would be positioned generally at the drilling rig. The subsurface and surface telemetry units 12 and 14, respectively, are in communication by means of the mud channel 16 including the column of mud within the drill string above the subsurface unit as well as the mud contained in any piping and/or flexible conduits extending from the top of the drill string at the surface, as discussed in more detail below. In particularly, the subsurface assembly 12 includes an uplink transmitter 18 which generates acoustic pulses in the mud channel 16 for transmission to the surface, where a surface pressure transducer 20 senses the pulses and provides corresponding input signals to an uplink receiver 22 as part of the surface telemetry assembly 14. Similarly, the surface telemetry assembly 14 includes a downlink transmitter 24 which generates acoustic pulses for transmission by the mud channel 16 down the well to a subsurface pressure traducer 26 which senses the pulses and provides corresponding input signals to a downlink receiver 28 as part of the subsurface telemetry unit 12.

The sub assembly also contains one or more detectors, or sensing tools, indicated generally at 30 in Fig. 1. In general, the sensing tools 30 detect and/or measure various quantities or parameters in the vicinity of the sub assembly and/or various parameters dealing directly with the drill string components such as the drill bit. Various such sensing tools are know for use in obtaining downhole measurements and producing electrical output signals, for example, as indicative of the quantities or parameters detected or measured. Tool control circuitry 32 is also included in the sub assembly for controlling operation of the sensors 30, generally in response to commands from the surface, for example, and for receiving the sensor output signals. A subsurface processor 34 may perform initial signal processing on the sensor signals, as well as manage the control signals for operation of the sensing tools 30. The initially processed data signals from the sensors 30 are conveyed to the uplink transmitter 18 from the subsurface processor 34 for use in generating of acoustic signals to be transmitted up the mud channel 16 to the surface.

The surface telemetry unit 14 also includes a surface processor 36 for processing the output data signals from the uplink receiver 22, reflecting the acoustic signals sent up the mud channel 16 from the subsurface telemetry unit 12. Output from the surface processor 36 may be in the form of data signals that can be shown on a display device 38, or recorded on a recording device 40.

Further details of a subsurface transceiver are illustrated in Fig. 2 wherein the uplink transmitter 18 is shown to include components used to make up a linear mud pulser. Components of the linear mud pulser include a continuously-valued signal mud valve 42 operated by a hydraulic actuator 44 which is controlled by an adaptive servo controller 46. A position transducer 47 detects the position of the valve element, or the size of the mud flow passage through the control orifice, of the valve 42 and provides a feedback signal of such information to the adaptive servo controller 46. A differential pressure transducer 48 detects the pressure differential in the mud across the valve 42, and provides a feedback signal of such information to the adaptive servo controller 46 through a low pass filter 49. The adaptive servo controller 46 uses the feedback information to adjust the operation of the hydraulic actuator 44 in controlling the valve 42 to make the acoustic mud pulses produced by the valve in the mud channel 16 to most closely emulate the modulated electrical signal input to the adaptive servo controller.

The uplink transmitter 18 may also include an uplink data scrambler 50 for receiving the data signals output from the processor 34 and randomizing them to facilitate operation of a clock recover circuit in the surface uplink receiver, as discussed below. The scrambled data signals are encoded by an uplink data encoder/modulater 52. To take advantage of modern digital communications techniques, the encoder/modulater 52 may be a three-level encoder, which produces a modulated uplink data output signal which is conveyed to the adaptive servo controller 46 of the uplink mud pulser.

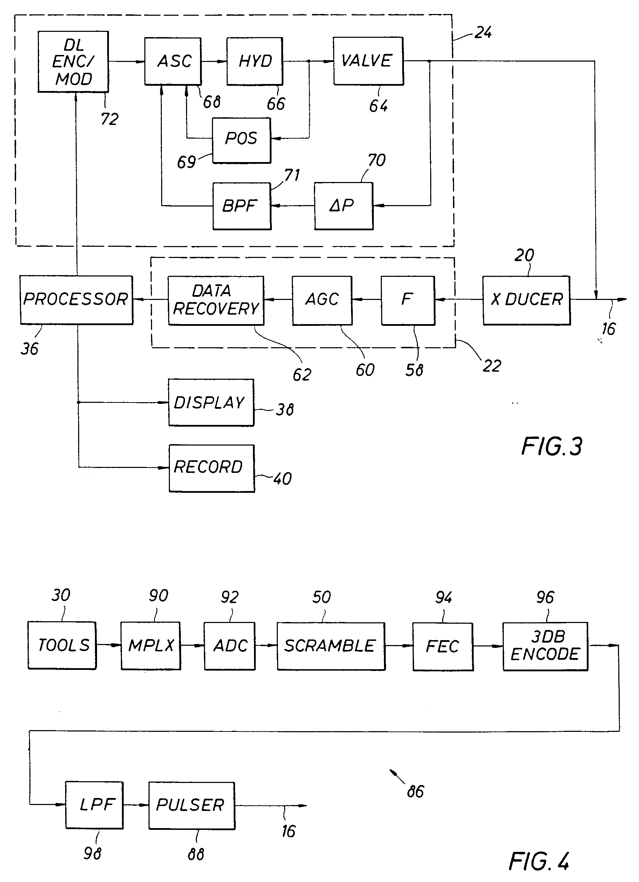

Fig. 3 shows further details of a surface transceiver, including the uplink receiver 22. Uplink pressure wave signals in the mud channel 16 are detected by the pressure transducer 20 to provide output electrical signals which are filtered at 58. The output signals from the filter 58 pass through an automatic gain control (AGC) 60 to uplink data recovery circuitry 62. Uplink data signals are further processed by the data recovery circuitry 62 as described in detail below. Output data from the data recovery circuitry 62 is conveyed to the surface processor 36.

The downlink transmitter 24 as part of the surface telemetry unit 14 includes a linear mud pulser comprising a continuously-valued signal mud valve 64 operated by a hydraulic actuator 66 controlled by an adaptive servo controller 68. The servo controller 68 operates the hydraulic actuator 66, in part, in response to feedback signals conveying information about the condition of the valve 64, as in the case of the uplink linear mud pulser described above.

A position transducer 69 provides a feedback signal with information about the position of the valve element, or the size of the flow passage through the valve control orifice, and a differential pressure transducer 70 provides a feedback signal with information about the pressure differential across the valve control orifice. The pressure differential signal is filtered by a bandpass filter 71. The adaptive servo controller 68 uses the feedback information to so operate the hydraulic actuator 66 to produce mud pulse signals output by the valve 64 that most closely emulate the modulated electrical signals input to the adaptive servo controller.

Downlink control signals from the surface processor 36 are conveyed to a downlink data encoder/modulater 72. It will be appreciated that the downlink control signals may be generally less detailed than the uplink data signals accommodated by a telemetry system according to the present invention. Consequently, the encoder/modulater 72 may output the downlink control signals in the form of on-off-tone modulated control signals to the adaptive servo controller 68 of the downlink mud pulser. Uplink data signals and downlink control signals are generated in different frequency ranges and may thus be frequency-multiplexed to allow transmission of signals in both directions along the mud channel 16 at the same time.

The subsurface transceiver included in the subsurface telemetry unit 12, as illustrated in Fig. 2, includes, in the downlink receiver 28, a bandpass filter 80 which receives the electrical control signals produced by the pressure transducer 26 in response to the downlink acoustic signals transmitted along the mud column 16. The filtered signals from the bandpass filter 80 pass through an automatic gain control (AGC) circuit 82 and are received by downlink data recovery circuitry 84. The downlink control signals processed by the data recovery circuitry 84 are conveyed to the subsurface processor 34 for use in controlling the sensor tools 30.

The choice of a frequency region within which to generate uplink telemetry signals depends, in part, on the power spectral density of the noise in the system. A telemetry system according to the present invention can operate with drilling actually occurring. Thus, both uplink and downlink signals may be sent along the mud channel during drilling. Consequently, the sources of noise that a telemetry system according to the present invention may encounter include not only the mud pump used to pump the mud down the drill string, but also the bit drilling on the bottom of the well and the drill pipe banging on the side of the well. Generally, the lower frequency region is noisier than the higher frequencies. However, the signal attenuation in the mud channel is proportional to the length of the channel, inversely proportional to the diameter of the mud channel and increases at a rate depending on the frequency. In general, the signal attenuation in the mud channel is dependent on the mechanical ability of the mud to transmit an acoustic wave. While the noise along the mud channel decreases with increasing frequency, so too does the signal gain. Consequently, the frequency of operation of the telemetry system must be chosen by weighing the signal-versus-noise factor. Either a baseband, or a higher frequency passband is selected within which to operate the uplink telemetry signal system; a relatively narrow passband is selected within which to operate the downlink telemetry system.

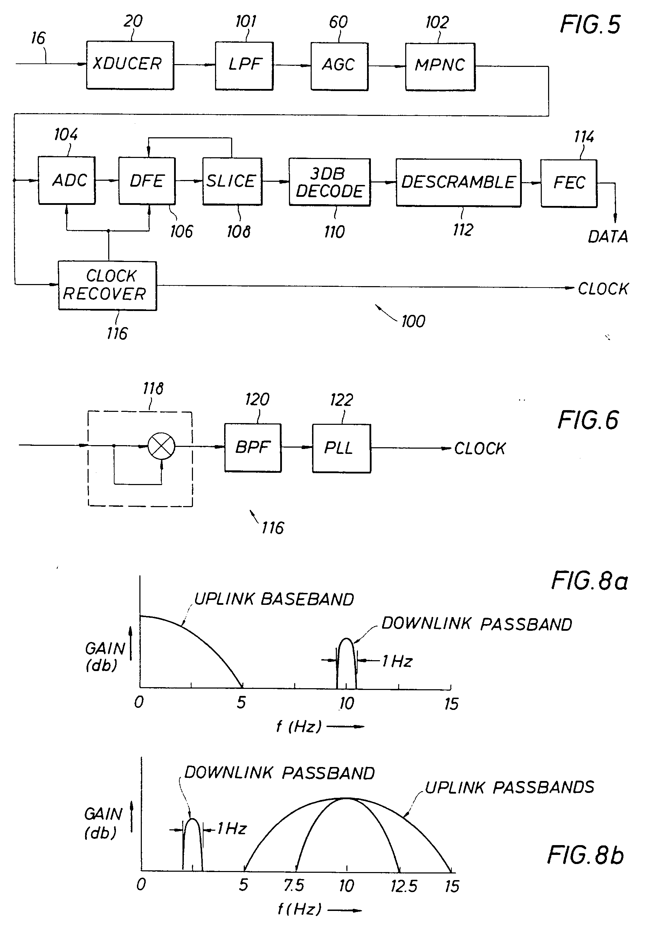

An uplink transmitter and an uplink receiver communicating by three-level duobinary signals in a baseband are illustrated in Figs. 4 and 5, respectively. The baseband uplink transmitter is shown generally at 86 in Fig. 4, with the sensor tools 30 and a continuous value, linear mud pulser 88. A data multiplexer 90 time-multiplexes the data from the sensors 30 into a single data stream to an analog-to-digital converter 92 which converts the analog sensor signals into digital, binary form. The data scrambler 50 randomizes the binary data signals. A forward error correction (FEC) coder 94, which may be of the Reed-Solomon encoder type, follows the data scrambler 50 and is in turn followed by a three-level duobinary (3DB) encoder 96. The FEC coder 94 adds code to the digital data stream for detection at the uplink receiver to discover any errors that may be made in the detection of the data stream at the surface. The coding added by the FEC coder 94 may also facilitate correction of such errors. The 3DB encoder 96 converts the binary signal into a discrete three-level signal. A transmitter low pass filter 98 effectively rounds off the edges of the output signal from the 3DB encoder 96 before the encoded signal is applied to the mud pulser 88. The signal to the mud pulser 88 is then effectively a smooth, three-level analog signal. The mud pulser 88 is operated to provide a mud pressure signal in the mud channel 16 that emulates, as closely as possible, the signal from the low pass filter 98.

The baseband uplink receiver is shown generally at 100 in Fig. 5, wherein are illustrated specific features of the receiver that may be included within the uplink data recovery circuitry 62 shown in Fig. 3. In the receiver 100 the filter between the uplink pressure transducer 20 and the automatic gain control 60 is specifically a low pass filter 101. The receiver 100 includes a mud pump noise canceler (MPNC) 102 receiving the signal output from the automatic gain control 60. The MPNC 102 may be of any type which effectively eliminates the noise provided by the mud pump, for example. The output signal from the MPNC 102 is digitized in an analog-to-digital converter 104, after which the signal is operated on by a decision feedback equalizer (DFE) 106. The DFE equalizes distortion of the signal due to the slope of the frequency response curve for the mud channel, and also corrects for noise not eliminated by the MPNC. A three-level signal slicer 108 receives the output from the DFE 106 and works in conjunction with the DFE. Errors remaining in the signal that is sliced into three levels are fed back to the DFE to optimize the coefficients of the DFE. The sliced signals are input to a three-level duobinary (3DB) decoder 110 which decodes the three-level duobinary (3DB) signals back into a binary signal. The binary signal is descrambled in a data descrambler 112, whose output is operated on by a forward error correction (FEC) decoder of the Reed-Solomon type, for example, 114. The FEC decoder 114 utilizes the coding added to the signal in the uplink transmitter 86 by the FEC coder 94 to detect the presence of errors in the binary signal and corrects whatever errors it can. Output from the FEC decoder 114 is in the form of a binary data signal which may then be processed by the surface processor 36 as shown in Fig. 3.

A clock recovery circuit 116 also receives the signal from the mud pump noise canceler 102 and provides an output clock pulse to the analog-to-digital converter 104 as well as the DFE 106 and the surface processor 36 (Fig. 3). Such a clock recovery circuit is necessary since the transformation of the data signals in the transmitter 86 to multi-level analog form, and transmission of these signals along the mud channel obscures any sharp delineations in the input signal to the receiver 100 which might otherwise provide a clock synchronization signal. Some details of the clock recovery circuit 116 are illustrated in Fig. 6. The circuit 116 includes a squaring circuit 118 which squares the output signal from the mud pump noise canceler 102 (Fig. 5) to provide a spectral line. The signal with the spectral line is filtered through a bandpass filter 120 to remove some of the non-spectral line energy from the signal. The spectral line frequency is then phase locked in a phase-locked loop circuit 122. Thereafter, the timing circuit may be processed in conventional fashion.

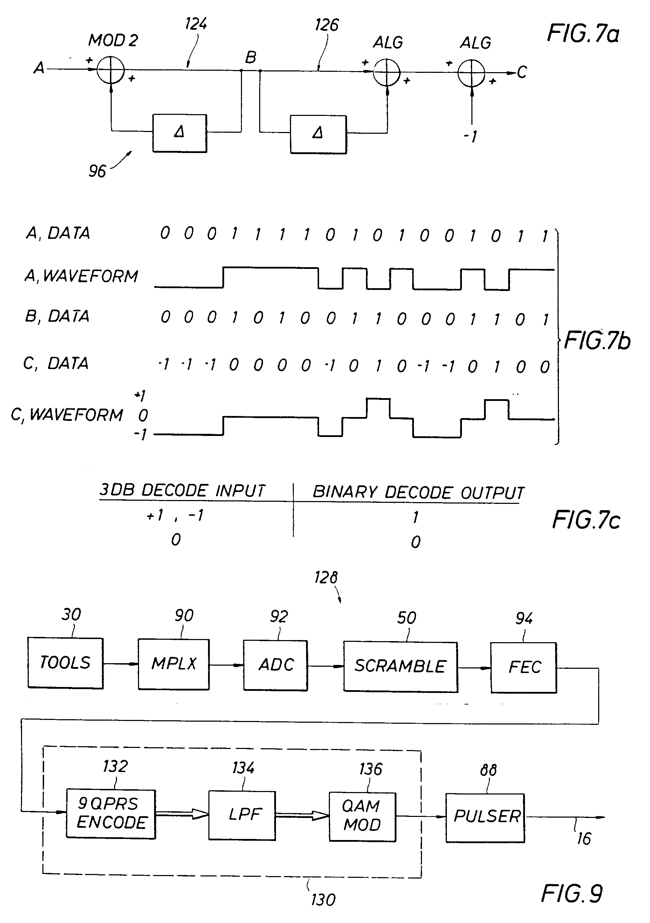

Use of three-level duobinary coding in the present invention may be further appreciated by reference to Fig. 7. Fig. 7(a) illustrates that the 3DB encoder 96 of Fig. 4 may include a precoder shown generally at 124 followed by a coder shown generally at 126. The precoder 124 includes a return loop through a time delay circuit to a modulo-2, or EXCLUSIVE-OR, addition with the binary input signal A. The coder 126 algebraically adds the encoded signal B from the precoder 124 to the same signal time-delayed in a delay circuit as shown to produce the 3DB output signal C. In the case of each circuit 124 and 126, the time delay is the time-width of a single symbol in the data stream. The signal format and waveform at various stages A, B and C relative to the encoder 96 may be appreciated by reference to Fig. 7(b). A dc adjustment of adding -1 to the signal at C is provided to center the waveform envelope at C on zero.

The 3DB decoder 110 of Fig. 5 effectively reverses the coding operation illustrated in parts (a) and (b) of Fig. 7, receiving a three-level duobinary signal and producing a binary output signal as indicated in Fig. 7(c).

The 3DB baseband telemetry system illustrated in Figs. 4 and 5, operating over a baseband of up to 5 Hz, is capable of communicating uplink through a mud channel in a range of 10 bits per second, which has twice the bandwidth efficiency of an ordinary binary telemetry system. Fig. 8(a) illustrates the frequency response curve for a baseband telemetry system as illustrated in Figs. 4 and 5, for example, operating up to 5 Hz. The three-level duobinary telemetry system may also be utilized in a passband at higher frequencies. A larger bandwidth than the 5 Hz baseband will accommodate greater data transmission rates. Also, more complex multi-level duobinary telemetry systems than the 3DB system of Figs. 4 and 5 can provide greater data transmission rates.

Fig. 9 illustrates a transmitter for a more complex, multi-level telemetry system in the form of a passband quadrature amplitude modulated three-level duobinary (QAM3DB) transmitter shown generally at 128. The transmitter 128 is illustrated with sensor tools 30 and a multiplexer 90 for multiplexing the data signals obtained from the sensors, an analog-to-digital converter 92 and a data scrambler 50 followed by an FEC coder 94, which may be of the Reed-Solomon encoder type, as in the 3DB transmitter 86 shown in Fig. 4. Likewise, the transmitter 128 is illustrated with a linear mud pulser 88. However, the coding and modulation system indicated generally at 130 includes a nine quadrature partial response signaling (9QPRS) encoder 132 followed by a transmit low pass filter 134 whose output is modulated by a quadrature amplitude modulator 136, the output of which drives the linear mud pulser 88.

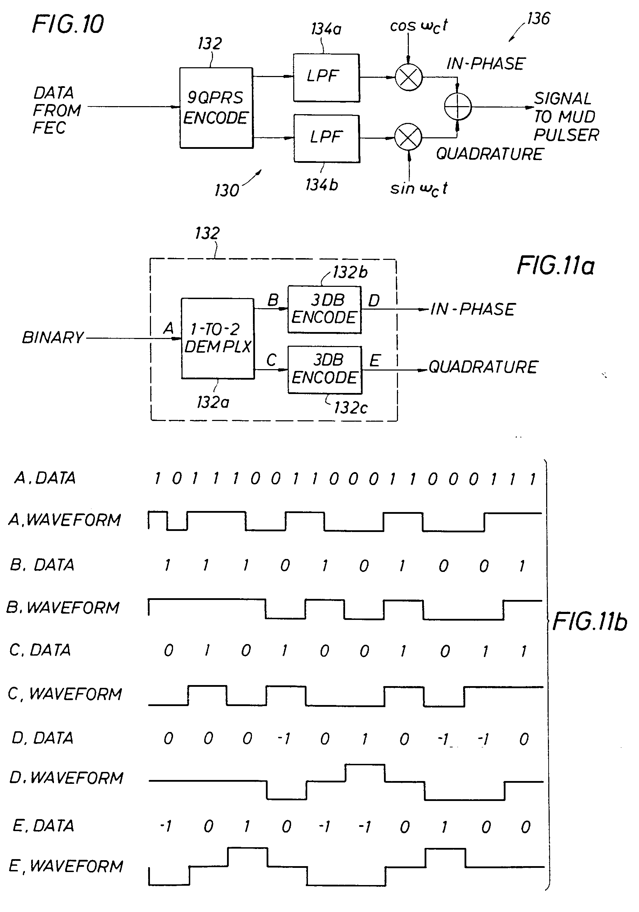

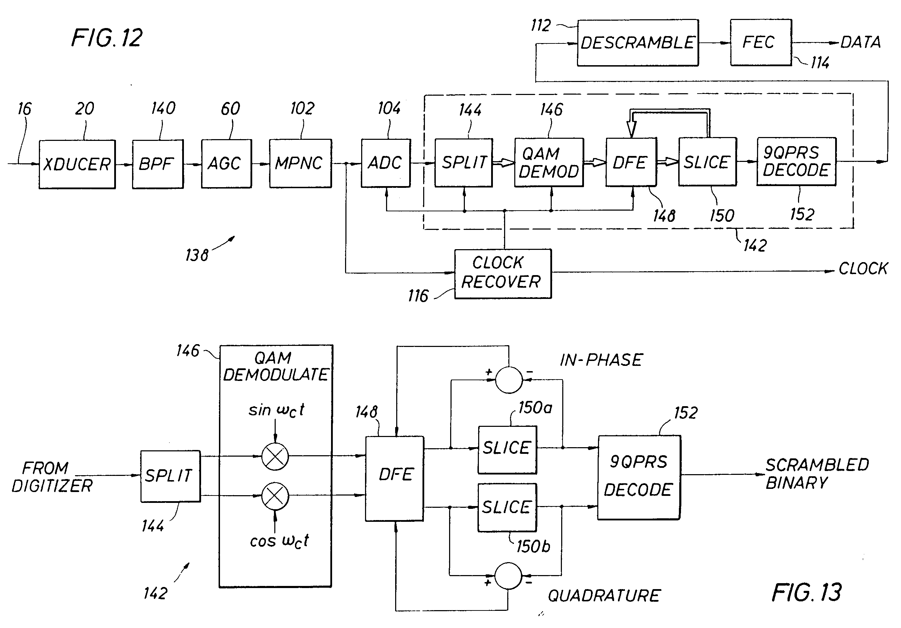

Details of the transmitter quadrature section 130 are shown in Fig. 10 wherein it is illustrated that in-phase and quadrature output signals from the 9QPRS encoder 132 are provided to separate low pass filters 134a and 134b, respectively. Operation of the 9QPRS encoder 132 may be further appreciated by reference also to Fig. 11 wherein in part (a) of Fig. 11 some details of the encoder 132 are provided. A baseband binary signal is input at A to a 1-demultiplexer 132a of the encoder 132. The demultiplexed signals are output from the demultiplexer 132a at B and C to separate 3DB encoders 132b and 132c which produce the encoded in-phase and quadrature signals D and E, respectively. The signal format and waveform at various points A through E in the encoder 132 illustrated in Fig. 11 (a) are provided in Fig. 11(b). The signal at point A is binary. At points B and C, the signals are still binary, but the input signal at A has been split into two signals as illustarated. The 3DB encoders 132b and 132c convert the binary signals input thereto to three-level duobinary baseband signals at D and E, respectively. As shown in Fig. 10, the quadrature amplitude modulator 136 multiplies the in-phase signal from the filter 134a by $\cos \omega_c t$, multiples the quadrature signal from the filter 134b by $\sin \omega_c t$, and adds the two results to produce the quadrature amplitude modulated three-level duobinary output (QAM3DB) signal to the mud pulser 88 in Fig. 9 in a bandpass centered on a carrier frequency given by $\omega_c/2\pi$. The signal to the mud pulser 88 in Fig. 9, which signal is converted to acoustic mud pulses for transmission up the mud channel 16, is a continuously-valued quadrature three-level duobinary signal.

An uplink receiver for use with the multi-level bandpass transmitter 128 is shown generally at 138 in Fig. 12. As in the case of the uplink receiver 100 illustrated in Fig. 5, the uplink receiver 138 is shown with the uplink pressure transducer 20 receiving the acoustic signals in the mud column 16, but now a bandpass filter 140 operates on the output from the transducer 20 and conveys the filtered signals to an automatic gain control 60. An MPNC 102 next operates on the signals, which are then conveyed to an analog-to-digital converter 104. A clock recovery circuit 116 provides output clock pulses to various components in the receiver 138. The final stages of the receiver circuitry include a data descrambler 112 followed by an FEC decoder 114 which may be of the Reed-Solomon decoder type. Output from the FEC decoder 114 is then processed by further circuitry (not illustrated in Fig. 12).

The receiver 138 in Fig. 12 includes a quadrature section 142 shown in detail in Fig. 13. The quadrature section 142 includes a phase splitter 144 providing two output signals from the input digital signal, and the output signals are operated on by a quadrature amplitude modulated three-level duobinary (QAM3DB) demodulator 146 which multiplies one of the output signals by $\sin \omega_c t$, and the other by $\cos \omega_c t$, respectively. The two output signals thus provided by the demodulator 146 are conveyed to a quadrature DFE 146 which operates on the signals utilizing feedback from a nine quadrature partial response signaling slicer 150. As illustrated in Fig. 13, the slicer 150 includes a pair of three-level slicers 150a and 150b. The slicer 150a operates on the in-phase signal from the quadrature DFE, providing a difference signal feedback to the quadrature DFE 148, to eliminate errors in the in-phase signal; the slicer 150b similarly operates on the quadrature signal with a difference feedback signal to the quadrature DFE to eliminate errors in the quadrature signal. The in-phase and quadrature signals thus processed are conveyed to the decoder 152, which combines the two input signals to provide a scrambled binary signal, which is then operated on by the data descrambler 112 as indicated in Fig. 12. The clock recovery circuit 116 provides clock pulses to the phase splitter 144, the quadrature amplitude demodulator 146 and the DFE 148, as shown in Fig. 12.

Fig. 8(b) illustrates a frequency response curve for telemetry signals in a passband centered on a carrier frequency of 10 Hz, with a 5 Hz bandwidth extending from 7.5 Hz to 12.5 Hz. A quadrature three-level duobinary telemetry signal such as utilized by the telemetry system of Figs. 4 and 5, with a data transmission rate of 10 bits per second, for example, may be accommodated within such a passband. The more extended, complex quadrature amplitude modulated three-level duobinary signals utilized in the telemetry system illustrated in Figs. 9 and 12, for example, might employ a wider bandwidth passband, such as that illustrated in Fig. 8(b), centered on 10 Hz and extending from 5 Hz to 15 Hz. The more detailed, multi-level signal thus employed, whose frequency response is illustrated in the passband from 5 to 15 Hz, may be expected to operate at a data transmission rate of 20 bits per second, for example.

It will be appreciated by the discussion above disclosing details of the two telemetry systems illustrated in Figs. 4, 5 and 9, 12 that even more complex multi-level continuously-valued telemetry signals may be transmitted along a mud channel in a measuring-while-drilling system, for example, utilizing like modern digital signal techniques discussed herein.

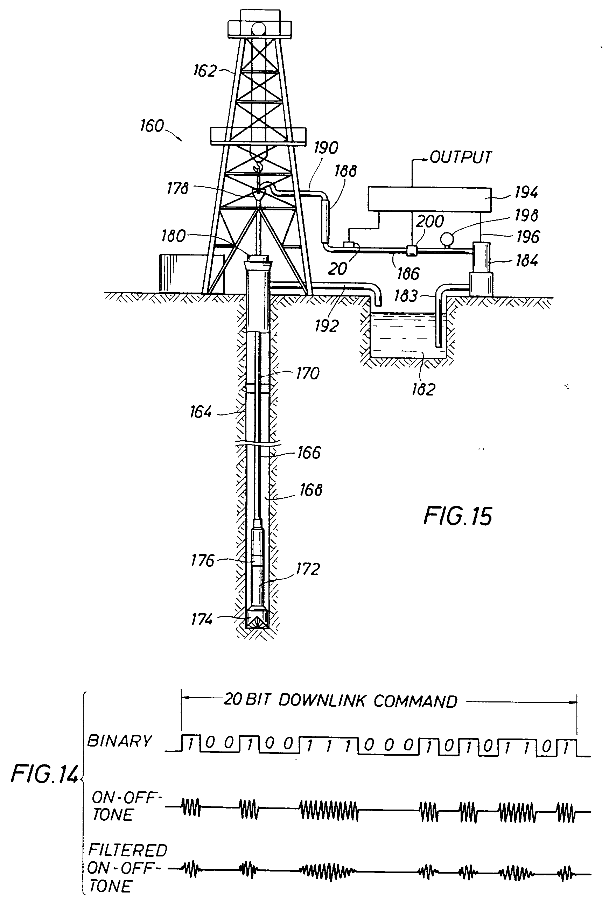

Either of the uplink telemetry system versions disclosed herein may be used in conjunction with a downlink telemetry system, with signals being transmitted in both directions in the mud channel at the same time as discussed above. Downlink signals are generally control signals for operating various components contained in the sub assembly, and particularly the sensing and measuring tools. The downlink control signals are relatively intermittent, and carry only relative small amounts of information compared to the uplink data signals. Consequently, the downlink transmitter 24 and the downlink receiver 28, shown in Figs. 3 and 2, respectively, may include modulator and demodulator circuitry for relatively simple signals. For example, the downlink data encoder/modulater 72 shown in Fig. 3 may be an on-off tone modulater including a bandpass filter for generating signals generally as illustrated in Fig. 14. As an example, a 20 bit downlink command word is illustrated in binary format in Fig. 14, with a waveform superimposed thereon.

A 1 Hz bandwidth may be utilized for the downlink system, as illustrated in Fig. 8(a), centered around a carrier frequency of 10 Hz for use with the baseband 3DB signal telemetry system of Figs. 4 and 5, for example. The on-off tone signal provided by the encoder/modulater 72 for the same 20 bit downlink command word is also illustrated in Fig. 14, wherein the tone, or frequency of oscillations within the non-zero envelope would be 10 Hz. The same on-off tone downlink signal is also illustrated in Fig. 14 after filtering. With the relative narrow bandwidth frequency response illustrated in Fig. 8(a), the downlink signal data transmission rate would be one-third bit per second, or 30 cycles per bit, so that the time required for passage of a 20 bit command word would be 60 seconds. In the downlink receiver 28 shown in Fig. 2, the data recovery circuitry 84 would include an on-off tone demodulator to receive the on-off tone signals and would output corresponding binary signals to the subsurface processor 34.

Fig. 8(b) illustrates the location of the on-off tone signal 1 Hz passband centered around 2.5 Hz, for example, for use with the QAM3DB signal telemetry bandpass system of Figs. 9 and 12.

Fig. 15 shows a well being drilled utilizing apparatus, shown generally at 160, including an MWD system employing a telemetry system according to the present invention. The drilling apparatus 160 includes a surface drilling derrick 162 positioned over the well being drilled 164. A drill string 166 extends into the wellbore 164, defining an annular region 168 between the exterior surface of the drill string and the wall of the well, separated from a central passage 170 defined by the interior of the drill string. A sub assembly 172 is positioned in the drill string 166 just above the drill bit 174. The sub assembly 172 includes sensors and measuring tools as well as the subsurface transceiver and associated circuitry of a telemetry system according to the present invention. In particular, the sub assembly 172 includes a continuous value mud pulse valve 176 as part of the subsurface transmitter for generating the uplink transmission mud pulse signals as discussed above.

The drill string 166 extends downwardly from an elevator assembly 178 suspended in the derrick 162, and passes through a rotary device 180 that provides rotational movement to the drill string to operate the drill bit 174. A tank 182 stores drilling mud at the surface. The mud can be drawn from the tank 182 by way of a pipe 183 connected to a mud pump 184. The outlet from the mud pump 184 goes to a conduit 186 which leads to a standpipe 188 which, in turn, is connected to the elevator assembly 178 through a flexible conduit 190. Operation of the mud pump 184 draws drilling mud from the source tank 182, and drives the drilling mud along the passageways 186, 188 and 190 to the top of the drill string 166. There, the mud is circulated down through the internal passage 170 of the drill string to the sub assembly 172. Mud passing through the sub assembly 172 exits one or more apertures in the drill bit 174, and is circulated back up the annular region 168 to the surface, where the drilling mud is removed from the well by means of a pipe 192 leading to the source tank 182. Circulation of the drilling mud in this fashion cools and lubricates the drill bit 174 and conveys cuttings from the well to the surface. Appropriate apparatus, (now shown) may process the drilling mud at the surface to remove cuttings and other debris, as well as to degas the mud, for example.

A surface processing unit 194 is connected to the surface transducer 20, shown positioned along the conduit 186 for sensing acoustic data signals from the subsurface telemetry unit within the sub assembly 172. Components of the surface transceiver may be included within the surface processing circuitry 194.

A sensor (not shown) may be positioned within the mud pump mechanism 184 to provide noise signals to the mud pump noise canceler circuitry contained within the transceiver in the processing unit 194. A desurger 198 may be positioned on the conduit 186, for example, to minimize surging effects in the mud channel due to the operation of the mud pump 184.

A surface mud valve 200 is shown connected to the conduit 186 between the desurger 198 and the uplink surface transducer 120. The mud valve 200 may be of the same type as the subsurface mud valve 176, or of some different construction. However, both valves 176 and 200 may be continuous-value, essentially linear valves for generating the respective uplink and downlink telemetry signals according to the present invention.

To be able to produce the relatively complex acoustic waveforms associated with a telemetry system according to the present invention, a continuous-value, essentially linear mud valve transmitter is preferred. Additionally, the mud valve transmitter should preferably be able to produce precise acoustic waveforms. Therefore, the mud valve of the mud pulse transmitter included in a telemetry system according to the present invention must be capable of producing mud pulses by assuming more than two positions, namely open and closed. Further, to achieve the precise control of the valve element necessary to generate precision multi-level mud pulses in the drilling mud channel, it is preferred that the mud valve be hydraulically-operated rather than electrically-operated, for example. The adaptive servo controller 46 is included in the uplink transmitter as shown in Fig. 2, for example, to enable the mud valve of the transmitter to be operated linearly. The hydraulic actuator 44 drives the mud valve.

A benefit of controlling the mud valve hydraulically instead of electrically is that a more dynamically precise control can be maintained over the valve opening which controls the mud pressure wave because hydraulic control is much more powerful than electric control. The ability to precisely control the valve opening results in the ability to implement more sophisticated and complex mud modulation schemes as discussed above, resulting in higher transmitter bandwidth efficiencies and, therefore, higher data transmission rates. The adaptive servo controller included in the mud pulse transmitter of the present invention optimizes control of the mud pressure wave shape by using closed loop control and adapting the controller response to changing conditions, such as changes in the mud density and/or borehole temperature, and wear of the mud valve itself. The adaptive servo controller thus optimizes the dynamic response of the hydraulically-actuated mud valve so that the pressure of the mud wave being transmitted up the mud channel matches the input to the mud pulse transmitter as closely as possible.

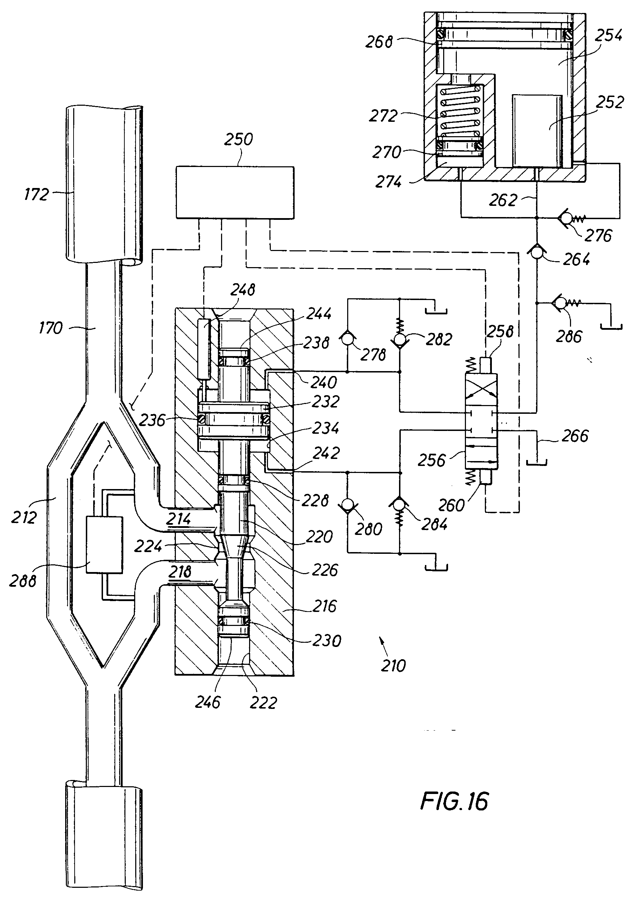

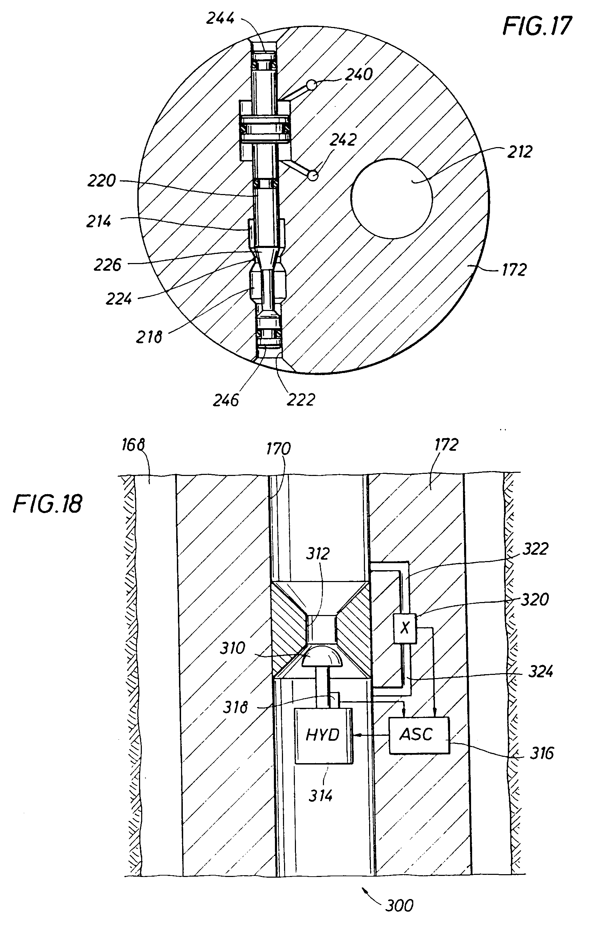

A hydraulically-controlled mud valve transmitter for use in a telemetry system according to the present invention is shown generally at 210 in Fig. 16. The mud valve included in the transmitter 210 is a pressure-balanced, piston-type valve, which avoids sharp impacts of metal against metal, for example. As shown in Figs. 16 and 17, the mud channel passage 170 through the drill string continues into the sub assembly 172 where it is split between a bypass 212 and an input flow passage 214 to the mud valve 216. An output flow passage 218 returns mud flow from the valve 216 to be joined with the fluid passing along the bypass 212 in the flow passage 170 for conveyance to the drill bit below (not shown). The mud valve 216 is a piston, or sleeve, type valve having a structured valve stem (piston) 220 moveable longitudinally within a structured bore (sleeve) 222. The bore 222 features a control orifice 224 positioned between the intersections of the bore with the input passage 214 and the output passage 218. The valve stem 220 features a tapered section 226 which moves into and out of the control orifice 224 with longitudinal movement of the valve stem. The longitudinal position of the tapered section 226 of the valve stem 220 relative to the control orifice 224 determines the cross-sectional area of the flow passage available for the drilling mud to move, within the bore 222, between the input passageway 214 and the output passageway 218. Two O-ring seals 228 and 230 of equal diameter are carried in appropriate grooves in the valve stem 220 on opposite sides of the intersections of the flow passages 214 and 218 with the bore 222 to provide sliding sealing engagement between the valve stem and the interior of the bore to limit movement of drilling mud within the bore.

The valve steam 220 may be moved downwardly relative to the bore 222, as viewed in Fig. 16, sufficiently to make sealing engagement between the tapered valve stem section 226 and the control orifice 224 to completely close the flow passage for drilling mud along the valve bore 222. Movement of the valve stem 220 upwardly relative to the bore 222, as viewed in Fig. 16, moves the tapered valve stem section 226 generally away from the control orifice 224. Longitudional movement of the valve stem 220 relative to the bore 222 thus varies the cross-sectional area of flow passage through the control orifice 224 available for drilling mud to flow between the input passage 214 and the output passage 218. The cross-sectional area of the flow passage available for mud passage through the valve 216 is thus a function of the longitudional position of the valve stem 220 relative to the bore 222.

The valve stem 220 carries a piston 232 in an enlarged portion of the bore 222 forming a chamber 234, to which the piston is slidingly sealed by an O-ring 236 carried in an appropriate groove in the outer edge of the piston. Beyond the piston 232, the valve stem 220 carries another O-ring 238 in an appropriate groove for providing sliding sealing engagement with the interior of the bore 222 on the side of the chamber 234 opposite that of the O-rings 228 and 230. All three O-rings 228, 230 and 238 are of the same diameter, while the O-ring 236 carried by the piston 232 is of significantly larger diameter.

The combination of the O-ring seals 228 and 236 defines a region of variable volume separated from a region of variable volume defined by the combination of the O-ring seals 236 and 238. Movement of the valve stem 220 along the bore 222 accompanies movement of the piston 236 relative to the chamber 234, varying the volumes of the two regions thus defined on opposite sides of the piston O-ring 236. A high pressure hydraulic fluid line 240 communicates with the region in the chamber 234 between the O-ring seals 236 and 238, while another high pressure hydraulic fluid line 242 communicates with the region in the chamber 234 between the O-ring seals 228 and 236. It will be appreciated that application of a fluid pressure differential across the piston 232 within the chamber 234 by appropriate fluid pressure communicated to the chamber 234 by means of the fluid pressure lines 240 and 242 may be utilized to apply a net longitudinal force on the piston, tending to move the piston in one sense or another along its longitudinal axis within the bore 222. Thus, the position of the valve stem 220 and, therefore, the extent of any cross-sectional area available for fluid flow through the control orifice 224, as determined by the position of the tapered valve stem section 226 relative to the control orifice, is controllable by the application of pressure differential across the piston 232 by means of the fluid pressure lines 240 and 242.

Since the diameter of the O-ring seal 236 across which the control fluid pressure is applied is considerably larger than the diameter of the remaining O-ring seals 228, 230 and 238, and because the O-ring seals 228 and 230 have the same diameter, sufficient pressure differential may be applied by means of the fluid pressure lines 240 and 242 to overcome any tendency of the pressure or fluid flow in the drilling mud lines 214 and 218 to resist movement of the valve stem 220 or to cause unwanted movement of the valve stem. Additionally, the two ends 244 and 246 of the valve stem 220 are exposed to drilling fluid pressure in the annular region of the well 168 outside of the sub assembly 172 as may be appreciated by reference to Fig. 17 which shows the placement of the bore 222 and the valve stem 220 therein within the sub assembly 172. The valve stem 220 is thus pressure-balanced by exposure to drilling fluid pressure at both ends 244 and 246 of the valve stem. The pressure balance on the valve stem 220 allows precise, controlled movement of the valve stem to be accomplished by the application of a relatively small amount of force on the piston 232. A linear displacement transducer 248 detects the position of the piston 232 relative to the chamber 234, whereby the precise position of the valve stem 220 within the bore 222 may be monitored. Electronic control circuitry 250 receives the output signal from the transducer 248.

A hydraulic pump 252 is positioned in conjunction with a hydraulic reservoir 254 to provide hydraulic fluid pressure to operate the valve 216. The pump 252 may be operated either by an electric motor or directly by an MWD turbine, for example. A 4-way, 3-position solenoid-actuated directional hydraulic fluid control valve in the form of a spool valve 256 is operated by the control circuitry 250 by means of solenoids 258 and 260 shown on opposite ends of the valve element of the control valve 256. A high pressure hydraulic fluid line 262 leads from the hydraulic pump 252 through a check valve 264 to one port on one side of the control valve 256. The other port 266 on the same side of the control valve 256 as the high pressure port inlet is vented. The reservoir 254 is pressure-compensated, with the compensation being provided by means of a compensator piston 268 which serves as a barrier between the drilling fluids in the annular region of the well 168 exterior to the sub assembly 172 and the hydraulic fluid in the reservoir. Another piston 270, operating against a compressed spring 272, defines, in part, a second chamber within the reservoir 254 as an accumulator 274. The accumulator 274 is in communication with the high pressure fluid line 262.

With the control valve 256 in its deactuated, or center, position as illustrated, high pressure hydraulic fluid from the pump 252 charges the high pressure accumulator 274 to the maximum system pressure which is determined by a system relief valve 276 in a feedback line to the reservoir 254. In this way, pressure within an acceptable range for operation of the control valve 256 is always available as determined, at least in part, by the pressure setting of the relief valve 276. Check valves 278 and 280 are provided in conjunction with additional relief valves 282 and 284 at the high pressure hydraulic ports 240 and 242, respectively, and a relief valve 286 is provided on the control valve side of the check valve 264 in the high pressure hydraulic fluid line 262, to provide pressure compensation to portions of the hydraulic system which are normally isolated while the sub assembly 172 is ascending or descending the wellbore. The pressure settings of the relief valves 282, 284 and 286 are appreciably greater than the pressure setting of the system relief valve 276.

It will be appreciated that the control valve 256 has right and left positions which direct fluid pressure to one side or the other of the piston 232 within the chamber 234 to drive the valve stem 220 longitudinally along the bore 222. With sufficient hydraulic fluid pressure available at the inlet fluid pressure line 262 to the control valve 256, the position of the valve element 220 and, therefore, the extent of a fluid passage opening through the control orifice 224 by the tapered surface 226 of the valve stem is determined by the operation of the control circuitry 250, sending current through the solenoids 258 and 260, to selectively provide a fluid pressure differential across the piston 232 in the chamber 234.

A differential pressure transducer 288 is exposed to the pressure of the drilling mud in the inlet 214 to the valve bore 222, and to the fluid pressure of the drilling mud in the outlet 218 from the valve bore. The output signal provided by the transducer 288 that is thus based on the pressure differential across the control orifice 224 is communicated to the control circuit 250 for use therein in determining the commands to the control valve 256 for positioning the mud pulse valve element 220. Operation of the valve element 220 to select the size of the flow passage through the control orifice 224 varies the back pressure in the mud channel in the passageway 170 above the mud pulse transmitter 210. Thus, movement of the valve stem 220 produces varying back pressure pulses in the mud channel resulting in acoustic pulses which are transmitted to the surface along the mud channel.

The electronic circuitry 250 includes the adaptive servo controller 46 of Fig. 1, receiving the pressure differential feedback from the differential pressure transducer 48 and the valve configuration feedback from the position transducer 47 as shown in Fig. 1, specifically by way of the pressure differential transducer 288 and the linear displacement transducer 248 of Fig. 16, respectively, for example. Similarly, the mud valve transmitter 210 may be used as the downlink transmitter 24, with feedback from the transducers 69 and 70 to the adaptive servo controller 68 which may be included in the circuitry 250.

The sleeve valve transmitter 210 of Figs. 16 and 17 is but one form of a continuous-value, essentially linear acoustic mud pulse transmitter that may be utilized in the present invention. In Fig. 18 a poppet-type acoustic mud valve transmitter is shown generally at 300. The mud pulse transmitter 300 includes a poppet valve element 310 positioned to move longitudinally relative to a control orifice 312 mounted in an extension of the mud channel passage 170 through the sub assembly 172 (or surface conduit 186 in Fig. 15), whereby back pressure acoustic pulses may be generated for transmission along the mud channel 16. A hydraulic controller 314 is shown to control the longitudinal position of the valve element 310, with the hydraulic controller under the operation of an adaptive servo controller 316. A valve element position sensor 318 determines the longitudinal position of the valve element 310 and, therefore, the flow passage cross section available through the orifice 312 for mud flow, and communicates an electronic sensing signal to the adaptive servo controller 316. A differential pressure transducer 320 is exposed to fluid pressure channels 322 and 324 opening in the mud channel 170 to the upstream and downstream side, respectively, of the control orifice 312. The output signal from the differential pressure transducer 320 is also conveyed to the adaptive servo controller 316.

The two continuous-value, essentially linear acoustic wave transmitters 210 and 300 both have advantages, and either may be utilized as part of the present invention for generating and communicating high data rate acoustic telemetry signals. It appears that the poppet-type valve 300 may be preferred for use in a mud flow line environment due to its potential for experiencing less wear than the sleeve-type valve 210, such as at the valve element and the control aperture, for example.

The mud pulse transmitters disclosed herein for use in the present invention each transmit pressure waves into the mud column inside the drill pipe, with the pressure waves containing information from the downhole sensors to be transmitted to the surface. The information from the downhole sensors is converted into digital form, multiplexed, encoded and modulated to obtain a signal which represents the desired shape of the mud pressure wave to be transmitted. The adaptive servo controller included in the mud pulse transmitter is utilized to cause the hydraulically-actuated mud valve to produce a mud pressure wave which matches as closely as possible the shape of the desired mud pressure wave. The shape of the desired mud pressure wave is determined by the specific coding and modulation techniques employed. The adaptive servo controller receives the form of the desired mud pressure wave signal from the data modulator, the sensed position of the mud valve stem relative to the control orifice in the mud valve and the pressure differential across the control orifice which represents the actual transmitted mud pressure wave. The output of the adaptive servo controller is the signal which controls the directional control valve element such as 256 in Fig. 16 or a comparable control element employed in the hydraulic controller 314 of Fig. 18, for example, which controls the flow of hydraulic fluid to the mud valve element to position the mud valve element relative to the control orifice.

The two mud pulse valves disclosed herein may be configured to present any cross-sectional area to the mud flow through the valve within the range limited by their respective control orifices. The flowthrough area is a continuous function of the displacement of the mud valve element, and the back pressure produced in the mud column by the mud valve is a continuous function of the area. Thus, the mud valve is operable to produce multi-level pressure waves that resemble analog waves.

In order to make the pressure wave shape in the mud column most closely resemble the shape of the voltage wave input to the mud pulser from the modulator, the mud pulser wave must be a linear function of the voltage wave. In general, the back pressure in the mud column, or the pressure differential across the mud valve control aperture, may not be a linear function of the position of the mud valve element. Nevertheless, the mud pulser may be made to operate to produce a mud pulse waveform as a linear function of the voltage data signal input to the mud pulser by use of the differential pressure feedback signal to the servo controller. The feedback signal is a measure of the actual shape of the waveform output from the mud valve as opposed to the positioning of the valve element by the servo controller. With this information input to the servo controller, that circuit may adjust the control signal that positions the valve element to make the output mud waveform an exact linear reproduction of the voltage data signal waveform.

It will be appreciated that the present invention provides an acoustic telemetry system for generating and transmitting high data rate acoustic pulses, for example along a mud channel in connection with a measuring-while-drilling system. The present invention employs modern digital communication techniques, and utilizes a continuous value, essentially linear acoustic pulse transmitter including a mud pulse valve.

**Claims**

1.  A digital mud pulse telemetry system, which comprises:

    a. a transmitter (12), including a multi-level encoder (32,34) and a mud-pulse transmitter (18); and

    b. a receiver (14) including a multi-level decoder (22,36);

    characterised in that said mud-pulse transmitter is a continuous value mud-pulse transmitter.

2.  A system according to claim 1 wherein said continuous value mud-pulse transmitter comprises a continuously-valued signal mud valve (42) arranged to have, in use, drilling mud passing therethrough, and control means arranged to control the effective opening size through said valve, and thereby back-pressure in said drilling mud.

3.  A system according to claim 2 wherein said valve (42) is a piston-type valve comprising a valve stem (220) moveable longitudinally within a bore (222), the bore featuring a control orifice (224) and the valve stem featuring a tapered section (226) arranged to move into and out of the control orifice with longitudinal movement of the valve stem, the valve arranged to permit, in use, said drilling mud to pass through said orifice, said control means being arranged to control the longitudinal position of said valve stem.

4.  A system according to claim 2 wherein said valve (42) is a poppet-type acoustic mud valve (300), comprising a control orifice (312) through which, in use, said drilling mud passes, and a poppet valve element (310) arranged to move longitudinally relative to said control orifice, said control means being arranged to control the longitudinal position of said valve element.

5.  A system according to claim 2, 3 or 4 further comprising pressure transducer means arranged to sense, in use, pressure in said drilling mud and to provide a signal responsive thereto to said control means as a feedback signal.

6.  A system according to any of claims 1 to 5 in which said mud-pulse transmitter is hydraulically controlled.

7.  A system according to any of claims 1 to 6 incorporated in measuring-while-drilling system.

8.  A system according to any of claims 1 to 7, which also comprises a downlink system.

9.  A system according to claim 8, wherein in use signals transmitted by the transmitter are frequency-multiplexed with signals transmitted in the downlink system.

10. A system according to claim 8 or 9, wherein the downlink system us an on-off-tone system comprising:

a. a downlink transmitter including an on-off-tone modulator, a bandpass filter and a continuous-value mud pulse transmitter; and

b. a receiver including an input bandpass filter, an automatic-gain-control, and an on-off-tone demodulator.

11. A system according to any of claims 1 to 10, wherein the transmitter transmits a three-level duobinary signal.

12. A system according to any of claims 1 to 10, wherein the transmitter transmits a quadrature amplitude modulated three-level duobinary signal.

13. A system according to any of claims 1 to 12, further comprising at least one downhole sensor; a multiplexer as part of the transmitter; an analog-to-digital converter as part of the transmitter; and at least one filter as part of the transmitter.

14. A system according to claim 13, wherein the transmitter further comprises a quadrature amplitude modulated three-level duobinary encoder; filters for the output of the encoder; and a quadrature amplitude modulator receiving the output of the filters.

**Patentansprüche**

1. Eine digitale Schlammpuls-Fernmesseinrichtung, bestehend aus:

   a. einem Sender (12), inkl. eines mehrstufigen Codierers (32, 34) und eines Schlammpulssenders (18); und
   b. einem Empfänger (14), inkl. eines mehrstufigen Decodierers (28,36),
   dadurch gekennzeichnet, dass der erwähnte Schlammpulssender ein Sender mit Dauerwert ist.

2. Ein System nach Anspruch 1, bei dem der erwähnte Schlammpulssender mit Dauerwert aus einem Signalschlammventil mit Dauerwert (42) besteht, der so ausgeführt ist, dass im Einsatz Spülschlamm durch dieses Ventil strömt. Weiter umfasst der Sender eine Steuervorrichtung, die zum Regeln der effektiven Größe der Öffnung im erwähnten Ventil dient, wodurch der Staudruck im erwähnten Spülschlamm geregelt wird.

3. Ein System nach Anspruch 2, bei dem das Ventil (42) ein Kolbenventil bestehend aus einer Ventilschieberspindel (220) ist, die sichter Länge nach in einer Bohrung (222) bewegen lässt, wobei die Bohrung eine Regelöffnung (224) aufweist und die Ventilschieberspindel einen spitz zulaufenden Bereich (226) aufweist, der zum Bewegen in und aus dem Kontakt mit der Regelöffnung während der Längsbewegung der Ventilschieberspindel ausgeführt ist, wobei das Ventil so ausgeführt ist, dass der erwähnte Spülschlamm im Einsatz durch die erwähnte Öffnung strömen kann und die Steuervorrichtung so ausgeführt ist, dass sie die Längsbewegung der erwähnten Ventilschieberspindel steuert.

4. Ein System nach Anspruch 2, bei dem das Ventil (42) ein akustisches Tellerschlammventil (300) ist, bestehend aus einer Regelöffnung (312), durch die der erwähnte Spülschlamm im Einsatz strömen kann und einem Ventiltellerelement (310), das zur Längsbewegung im Verhältnis zur erwähnten Regelöffnung ausgeführt ist, wobei die erwähnte Regelöffnung zum Regeln der Längsstellung des erwähnten Ventilelements ausgeführt ist.

5. Ein System nach Ansprüchen 2, 3 oder 4 oben, weiter bestehend aus einer Druckwandlervorrichtung, die zum Erkennen des Drucks im erwähnten Spülschlamm im Einsatz und zur Ausgabe eines Signals, ansprechend auf den o.g. Druck, an die Steuervorrichtung als Rücklaufsignal ausgeführt ist.

6. Ein System nach einem der Ansprüche 1 bis 5, bei dem der erwähnte Schlammpulssender hydraulisch aktiviert wird.

7. Ein System nach einem der Ansprüche 1 bis 6, das in ein Messen-beim-Bohren-System aufgenommen ist.

8. Ein System nach einem der Ansprüche 1 bis 7, das weiter ein Abwärtsstreckensystem beinhaltet.

9. Ein System nach Anspruch 8, bei dem im Einsatz vom Sender übertragene Signale mit Signalen, die im Abwärtsstreckensystem übertragen werden, frequenzmultiplexiert werden.

10. Ein System nach Ansprüchen 8 oder 9, bei dem das Abwärtsstreckensystem ein Ein-Aus-Tonsystem bestehend aus folgendem ist:

    a. einem Abwärtsstreckensender, inkl. eines Ein-Aus-Tonmodulators, eines Bandpassfilters und eines Schlammpulssenders mit Dauerwert; und
    b. einem Empfänger, inkl. eines Eingangsbandpassfilters, einer automatischen Verstärkungssteuerung und eines Ein-Aus-Tondemodulators.

11. Ein System nach einem der Ansprüche 1 bis 10, bei dem der Sender ein dreistufiges, duobinäres Signal ausstrahlt.

**12.** Ein System nach einem der Ansprüche 1 bis 10, bei dem der Sender ein quadraturamplitudenmoduliertes, dreistufiges, duobinäres Signal ausstrahlt.

**13.** Ein System nach einem der Ansprüche 1 bis 12, weiter bestehend aus mindestens einem Bohrlochsensor, einem Multiplexer als Bestandteil des Senders, einem A/D-Wandler als Bestandteil des Senders und mindestens einem Filter als Bestandteil des Senders.

**14.** Ein System nach Anspruch 13, bei dem der Sender weiter folgende Elemente beinhaltet: einen quadratur-amplitudenmodulierten, dreistufigen, duobinären Codierer, Filter für den Codiereausgang und einen Quadratur-Amplitudenmodulator, der den Ausgang der Filter empfängt.

**Revendications**

**1.** Un système de télémétrie par transmission d'impulsions numériques par la boue, englobant :

a. un émetteur (12), qui englobe un codeur multiniveaux (32,34) et un émetteur d'impulsions de boue (18) ; et
b. un récepteur (14) qui englobe un décodeur multiniveaux (22,36) ;
caractérisé en ce que ledit émetteur d'impulsions de boue est un émetteur d'impulsions de boue à valeur continue.

**2.** Un système selon la revendication 1, dans lequel ledit émetteur d'impulsions de boue à valeur continue englobe une vanne à boue à signal à valeur continue (42) agencée pour être traversée, pendant l'utilisation, par la boue de forage, et des moyens de commande agencés pour réguler la taille réelle de l'ouverture à travers ladite vanne, et donc la contre-pression dans ladite boue de forage.

**3.** Un système selon la revendication 2, dans lequel ladite vanne (42) est une soupape de type à piston qui englobe une tige de soupape (220) qui peut se déplacer longitudinalement à l'intérieur d'un alésage (222), l'alésage possédant un orifice de commande (224) et la tige de soupape possédant une section conique (226) agencée pour entrer et sortir de l'orifice de commande avec un mouvement longitudinal de la tige de soupape, la soupape étant agencée pour permettre à la boue de forage, pendant l'utilisation, de traverser ledit orifice, lesdits moyens de commande étant agencés pour commander la position longitudinale de ladite tige de soupape.

**4.** Un système selon la revendication 2, dans lequel ladite vanne (42) est une vanne à boue acoustique de type à champignon (300), englobant un orifice de commande (312) à travers lequel, pendant l'utilisation, passe ladite boue de forage, et un élément de soupape à champignon (310) agencé pour se déplacer longitudinalement relativement audit orifice de commande, lesdits moyens de commande étant agencés pour commander la position longitudinale dudit élément de soupape.

**5.** Un système selon la revendication 2, 3 ou 4, qui englobe de plus des moyens transducteurs de pression agencés pour capter, pendant l'utilisation, la pression dans ladite boue de forage et pour fournir un signal de réponse à cette pression auxdits moyens de commande sous forme d'un signal de rétroaction.

**6.** Un système selon l'une quelconque des revendications 1 à 5, dans lequel ledit émetteur d'impulsions de boue est commandé hydrauliquement.

**7.** Un système selon l'une quelconque des revendications 1 à 6 incorporé dans un système de mesure pendant le forage (MWD).

**8.** Un système selon l'une quelconque des revendications 1 à 7, qui englobe de plus un système à liaison descendante.

**9.** Un système selon la revendication 8 dans lequel, pendant l'utilisation, les signaux émis par l'émetteur sont multiplexés en fréquence avec des signaux transmis dans le système à liaison descendante.

**10.** Un système selon la revendication 8 ou 9, dans lequel le système à liaison descendante est un système à tonalité intermittente, englobant :

a. un émetteur de liaison descendante englobant un modulateur à tonalité intermittente, un filtre passe-bande et un émetteur d'impulsions de boue à valeur continue ; et
b. un récepteur englobant un filtre passe-bande d'entrée, une commande automatique de gain et un démodulateur à tonalité intermittente.

**11.** Un système selon l'une quelconque des revendications 1 à 10, dans lequel l'émetteur émet un signal duobinaire à trois niveaux.

**12.** Un système selon l'une quelconque des revendications 1 à 10, dans lequel l'émetteur émet un signal duobinaire à trois niveaux à modulation d'amplitude en quadrature.

**13.** Un système selon l'une quelconque des revendications 1 à 12, qui englobe de plus au moins un capteur de fond; un muliplexeur qui fait partie de l'émetteur ; un convertisseur analogique/numérique qui fait partie de l'émetteur ; et au moins un filtre qui fait partie de l'émetteur.

14. Un système selon la revendication 13, dans lequel l'émetteur englobe de plus un codeur duobinaire à trois niveaux à modulation d'amplitude en quadrature ; des filtres pour la sortie du codeur ; et un modulateur d'amplitude en quadrature qui reçoit la sortie des filtres.

FIG.1

FIG.2

FIG.3

FIG.4

*FIG.5*

*FIG.6*

*FIG.8a*

*FIG.8b*

FIG.7a

MOD 2    124                    126        ALG        ALG

A ⊕ +          B          ⊕ +          ⊕ +   C
    +                           +            +

        Δ              Δ                    -1

96

A, DATA        0 0 0 1 1 1 1 0 1 0 1 0 0 1 0 1 1

A, WAVEFORM

B, DATA        0 0 0 1 0 1 0 0 1 1 0 0 0 1 1 0 1

C, DATA        -1 -1 -1 0 0 0 0 -1 0 1 0 -1 -1 0 1 0 0

                +1
C, WAVEFORM   0
                -1

FIG.7b

| 3DB DECODE INPUT | BINARY DECODE OUTPUT |
|------------------|----------------------|
| +1 , -1          | 1                    |
| 0                | 0                    |

FIG.7c

128

| 30 | 90 | 92 | 50 | 94 |
|-----|------|-----|----------|-----|
| TOOLS | MPLX | ADC | SCRAMBLE | FEC |

| 132 | 134 | 136 | 88 |
|------|-----|----------|--------|
| 9 QPRS ENCODE | LPF | QAM MOD | PULSER |

130                                    16

FIG.9

FIG.10

*132*

DATA
FROM
FEC

*9QPRS
ENCODE*

*130*

*134a*

*LPF*

*LPF*

*134b*

cos ω$_c$t

*136*

IN-PHASE

⊗

⊕

⊗

QUADRATURE

sin ω$_c$t

SIGNAL
TO MUD
PULSER

*132*

*FIG.11a*

*132b*

BINARY

A | *1-TO-2
DEMPLX*

*132a*

B | *3DB
ENCODE* | D → IN-PHASE

C | *3DB
ENCODE* | E → QUADRATURE

*132c*

A. DATA        1 0 1 1 1 0 0 1 1 0 0 0 1 1 0 0 0 1 1 1

A. WAVEFORM

B. DATA        1   1   1   0   1   0   1   0   0   1

B. WAVEFORM

C. DATA        0   1   0   1   0   0   1   0   1   1

C. WAVEFORM

D. DATA        0   0   0  -1   0   1   0  -1  -1   0

D. WAVEFORM

E. DATA       -1   0   1   0  -1  -1   0   1   0   0

E. WAVEFORM

*FIG.11b*

*FIG.12*

EP 0 617 196 B1

*FIG.13*

FIG.15

FIG.14

*FIG.16*

FIG.17

FIG.18